# EUROPEAN PATENT SPECIFICATION

(11) **EP 1 743 077 B1**
(45) Date of publication and mention of the grant of the patent: **25.11.2009**
(21) Application number: 05735584.4
(22) Date of filing: 06.05.2005
(51) Int. Cl.: E04D 3/28

(54) **A TRANSULENT ROOF PANEL**
LICHTDURCHLÄSSIGE DACHPLATTE
UN PANNEAU

(30) Priority: 07.05.2004 IE 20040318
(43) Date of publication of application: 17.01.2007
(73) Proprietor: Kingspan Research and Developments Limited, Kingscourt, County Cavan (IE)
(72) Inventor: CAROLAN, James, Kingscourt, County Cavan (IE)
(74) Representative: O'Brien, John Augustine
(86) International application number: PCT/IE2005/000051
(87) International publication number: WO 2005/108707

(56) References cited:
- EP-A- 0 381 339
- EP-A- 0 437 810
- EP-A- 0 576 062
- EP-A- 0 624 696
- WO-A-01/34379
- DE-A1- 3 604 951
- DE-A1- 3 638 615
- GB-A- 542 085
- GB-A- 2 069 036
- GB-A- 2 269 833
- US-A- 3 869 219
- US-A- 5 163 257
- US-A- 5 509 250
- US-A- 5 987 837
- US-B1- 6 190 742

## Description

### Introduction

The invention relates to a translucent roof panel.

In general, translucent roof panels (also called rooflights) comprise an outer translucent weather sheet and an inner translucent liner sheet.

More particularly, the invention relates to a translucent panel of the type comprising a single body of translucent material, the single body comprising an outer weather skin an inner liner skin and a multiwall support between the outer weather skin and the inner liner skin, the inner liner skin, outer weather skin and multiwall support all being of translucent material, the panel further comprising an integral overlap portion at at least one end and/or side thereof.

EP-A-624696, EP-A-0381339 and EP-0437810 describes a translucent panel of this type.

US 6,190,742 describes a one piece frame surrounding a translucent plate in which the outer periphery of the translucent body all around its perimeter is flattened and the frame is injection moulded onto the flattened region.

GB 542,085 describes a light transmitting screen which may have a hook or jointing formation for connection to an adjacent unit. Figure 3 of GB 542,085 shows a panel according to the preamble of claim 1.

One of the problems with conventional rooflights is that they are not efficient insulators and the rate of heat loss through the rooflights is relatively high. Another problem is that conventional rooflights must be relatively thick to achieve desired insulation properties. Thus, the rooflights are expensive in material usage.

Other problems are that the form of the overlap portion does not allow a good aesthetic finish and that the manufacture of the overlap portion on a large factory scale is not efficient.

This invention is directed towards providing a translucent panel which will address at least some of these problems.

### Statements of Invention

The outer weather skin of the panel according to the invention is profiled and the overlap portion has a thickness close to the thickness of the outer weather skin wherein the multiwall support with or without the liner skin is collapsed against the inner surface of the outer weather skin at the overlap portion, the panel comprising a main panel portion, the overlap portion and a border between the overlap portion and the main panel portion. The border extends between the outer weather skin of the overlap portion and the inner liner skin of the main body.

The invention is characterized in that the border extends substantially at right angles to the outer weather skin and the inner liner skin.

In a further embodiment the multiwall support with or without the liner skin is pressed against the inner surface of the outer weather skin at the overlap portion.

In another embodiment the liner skin and the multiwall support are collapsed or forced against the inner surface of the outer weather skin at the overlap portion.

In a further embodiment the border comprises a thickness substantially equal to the combined thickness of the multiwall support and inner liner skin.

In one embodiment the panel comprises a spacer for extending between the outer surface of the inner liner and a building frame element such as a purlin.

In another embodiment the spacer is attached to the panel.

In a further embodiment the spacer is bonded to the panel.

In one embodiment the spacer is attached to the panel adjacent to the overlap portion.

In another embodiment the translucent panel comprises a fixing for extending through the panel and the spacer to fix the panel to a building frame element such as a purlin.

In a further embodiment the fixing has a drill point for drilling through the panel, the spacer, and into a building frame element.

In one embodiment the fixing comprises reaming means for reaming a hole in the panel.

In another embodiment the hole in the panel is larger in diameter than the diameter of a main shaft of the fixing.

In a further embodiment the reaming means comprises sharpened flanges in the fixing shaft.

In another embodiment the multiwall layer comprises a profiled form except at the overlap portion.

In a further embodiment the translucent material comprises a translucent thermosetting material.

In one embodiment the translucent material comprises a polycarbonate material.

The invention also provides a roof or wall structure incorporating a panel of the invention.

### Brief Description of the Drawings

The invention will be more clearly understood from the following description thereof given by way of example only, with reference to the accompanying drawings, in which:-
Fig. 1 is a perspective view of a translucent panel according to the invention, in use;
Fig. 2 is a perspective view from the underside of the panel;

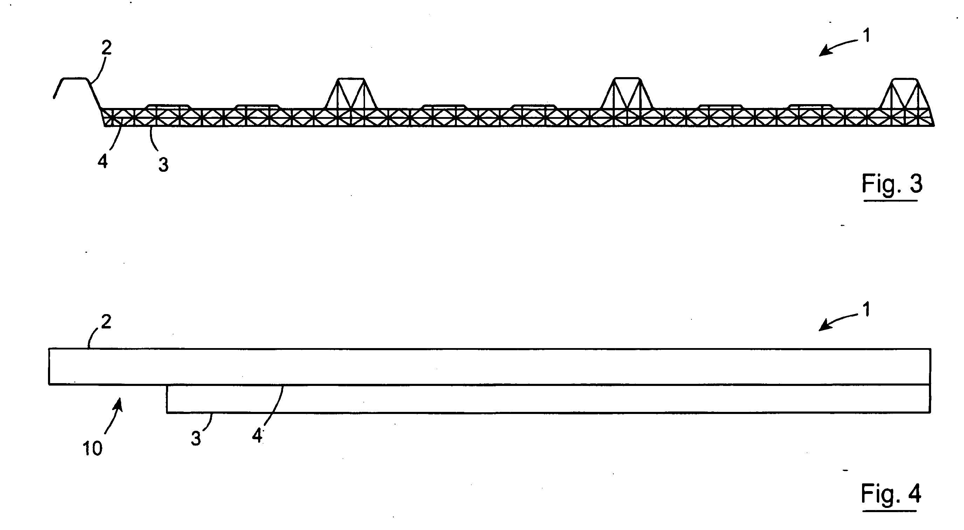

Fig. 3 is a side view of the panel;
Fig. 4 is an end view of the panel;
Figs. 5(a) to 5(d) are side views illustrating the collapsing of inner liner skin and multiwall support at an overlap portion;
Fig. 6 is an enlarged end view of an overlap portion prior to collapsing of the inner liner skin and multiwall support.
Fig. 6(a) is an enlarged end view of the overlap portion after collapsing of the inner liner skin an multiwall support;
Fig. 7 is a perspective view of a fixing used with the panel; and
Fig. 8 is an end view of the panel, and a spacer fixed to a purlin using the fixing of Fig. 7.

### Detailed Description

Referring to the drawings there is illustrated a translucent panel or rooflight 1 comprising a single body of translucent polycarbonate material, the single body comprising a profiled outer weather skin 2, an inner liner skin 3 and, a multiwall support 4 between the inner liner 3 and the weather skin 2. The inner liner skin 3, outer weather skin 2, and the multiwall support are all of translucent polycarbonate material. The rooflight 1 may be of Lexan Thermoclear multiwall polycarbonate sheet form GE Structural Products. This material is highly resistant to sheet covering discoloration, loss of light and loss of strength due to weathering.

The panel 1 has an integral overlap portion 10 which is illustrated in this case at one end of the panel. This is used for overlapping with other panels such as composite insulating roof or wall panels of similar profile. The overlap portion 10 has a substantially reduced thickness with respect to the overall thickness of the panel and in this case the thickness is reduced to close to thickness of the outer weather skin 2.

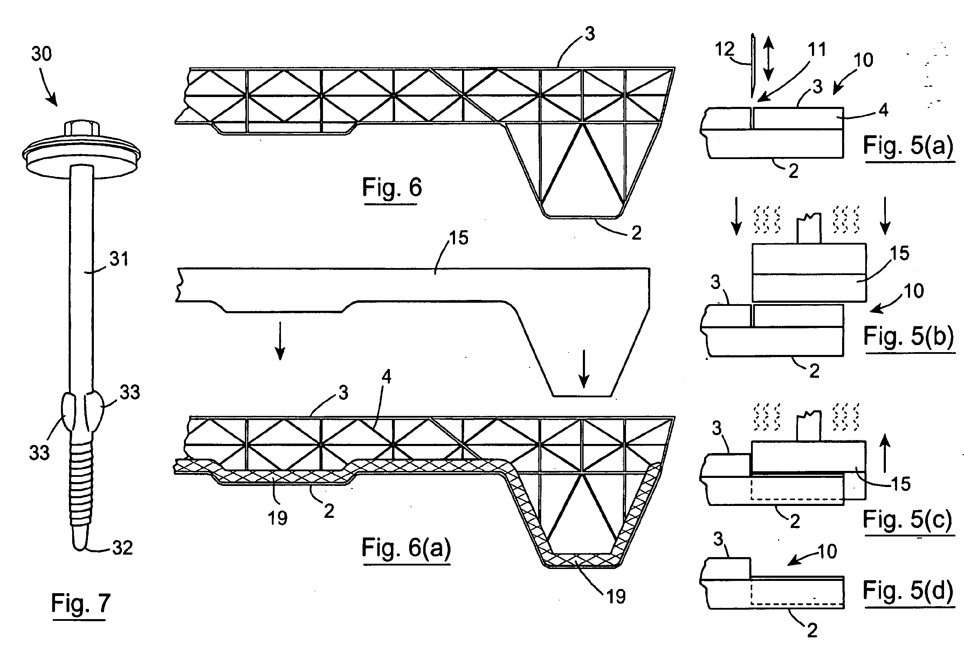

Referring in particular to Figs. 5 and 6 this is achieved by collapsing and/or forcing the inner liner skin 3 and the multiwall support 4 in the region of the overlap towards the outer weather skin 2. In a first step (Fig. 5(a)) the inner liner skin 3 is notched at 11 with a cutting tool 12. A heated pressing tool 15 of complementary profile to that of the outer skin is then pressed against the inner liner skin 3 and multiwall support 4 (Figs. 5(b), 5(c)) which are melded to the inner surface of the outer skin 2 (Figs. 5(d), 6(a)). The melded material 19 is shown in exaggerated form and thickness in Fig. 6(a). We have found that this is a very efficient method for manufacture on a large factory scale.

The panel 1 further comprises a border 25 extending between the main panel portion and the overlap 10. The border 25 has a depth comprising the overall depth of the multiwall support 4 and the inner liner skin 3 and extends substantially at right angles to the outer weather skin 2 and inner liner skin 3.

Formation of the notch 11 prior to pressing provides for the border 25 on pressing. In the preferred embodiment shown the notch 11 extends across the width of the panel, however, it will be appreciated that the depth and/or extent of the notch 11 may be varied as required.

In use, the border 25 and overlap portion 10 together define a connection means for connection of the panel 1 with adjacent panels having a similar profile. The adjacent panels may be rooflight panels or insulated building panels having the same profile as the outer weather skin. The adjacent panels may be of a similar or greater thickness than the panel 1. The panel 1 is configured so that in use the overlap 10 overlaps an adjacent panel of a similar profile and the border 25 lies side by side in close abutment with the side edge of the adjacent panel. A sealing member for example, a tape covering may be applied to the border 25. The overlap 10 and border 25 provide for an improved connection between the panels 1 and adjacent roof panels and also for improved seal and insulation of the roofing system.

As noted above, the pressing tool has the profile of the outer skin 2 so that the inner liner skin 3 and multiwall support 4 are compressed against the outer skin, but the overall profile of the outer skin is maintained. The overlap 10 extends laterally across the width of the panel 1. In the embodiment shown the outer skin 2 is profiled and the overlap is formed in such a way as to maintain the profile of the outer weather skin at the overlap 10. This provides a good aesthetic finish to the roof and ensures that an improved seal and connection is achieved between the panel 1 and adjacent panels.

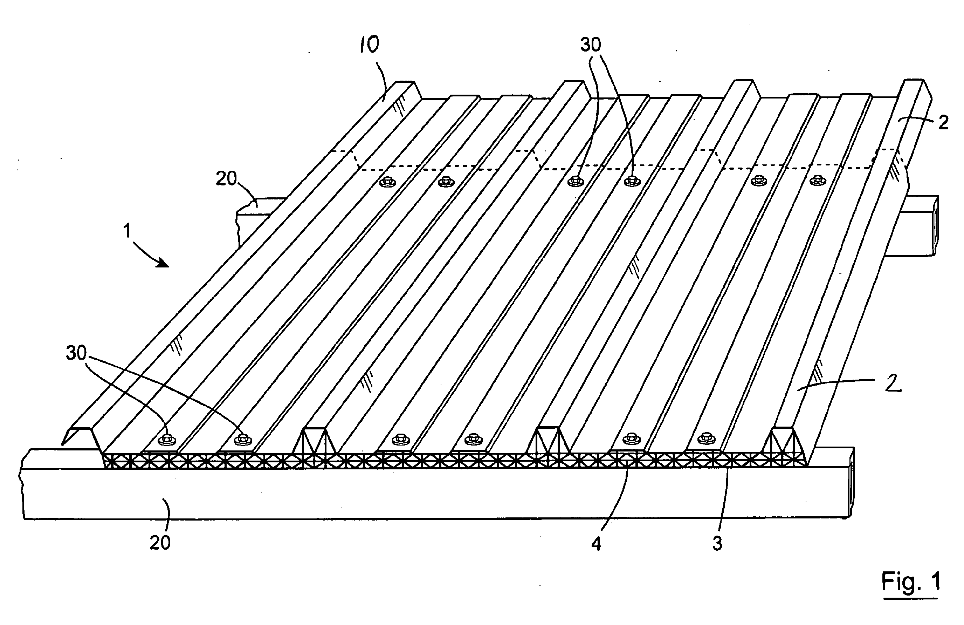

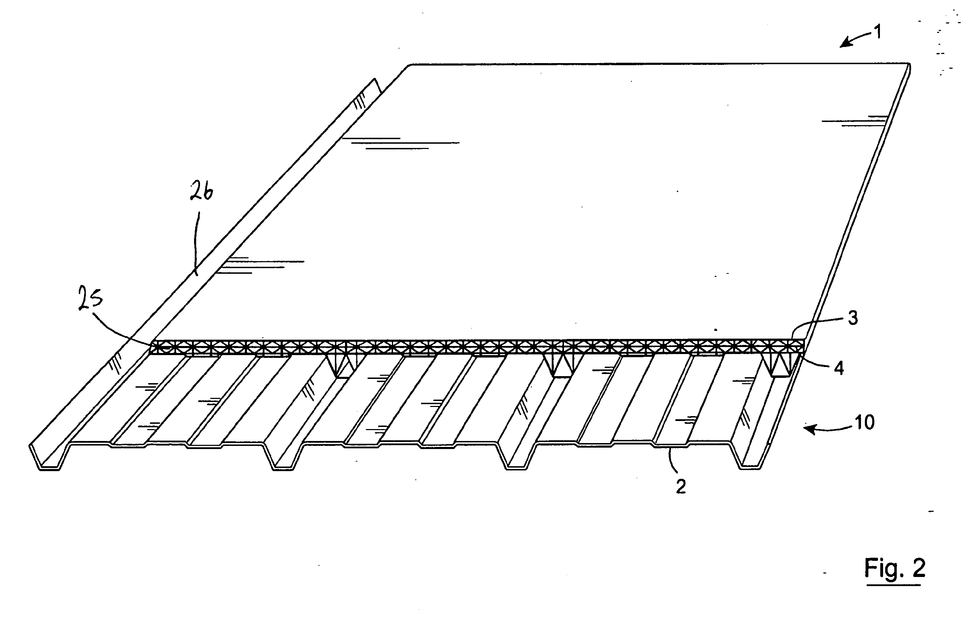

In addition to the overlap portion 10 which in the embodiment shown extends laterally, the panel 1 further comprises a side lap 26 (Figs. 1 and 2) which extends longitudinally along one side of the panel 1. The side lap 26 in this case comprises only the outer skin 2 and provides means for connection with adjacent profiled building panels or adjacent like panels 1. If necessary the side lap 26 may be formed in process similar to that for forming the overlap 10.

The panel I also comprises at least one and in this case a number of spacers 20 for extending between the outer surface of the inner liner 3 and a building frame element such as a roof purlin 40. The spacer 20 may for example be of hollow PVC section. For ease of use on-site, preferably the spacer 20 is attached, for example by bonding such as adhesive bonding, to the panel 1 at the production stage. The spacers 20 are used to bridge the gap in thickness between the shallow rooflight 1 and an adjacent thicker composite insulated panel. The rooflight is shallow because of the high thermal insulation efficiency of the translucent panel.

It is noted that the border 25 provides a clearly defined attachment region to enable attachment of spacers directly adjacent to the overlap portion 10 of the panel 1. In this way a spacer 20 can be located side by side with the side edge of an adjacent panel so that the border 25 and the spacer 20 together overlap portions of the side edge of an adjacent insulated panel. The insulated panel may have a thickness greater than the thickness of the panel 1 at the border. This provides for a good seal and good insulation at the connection.

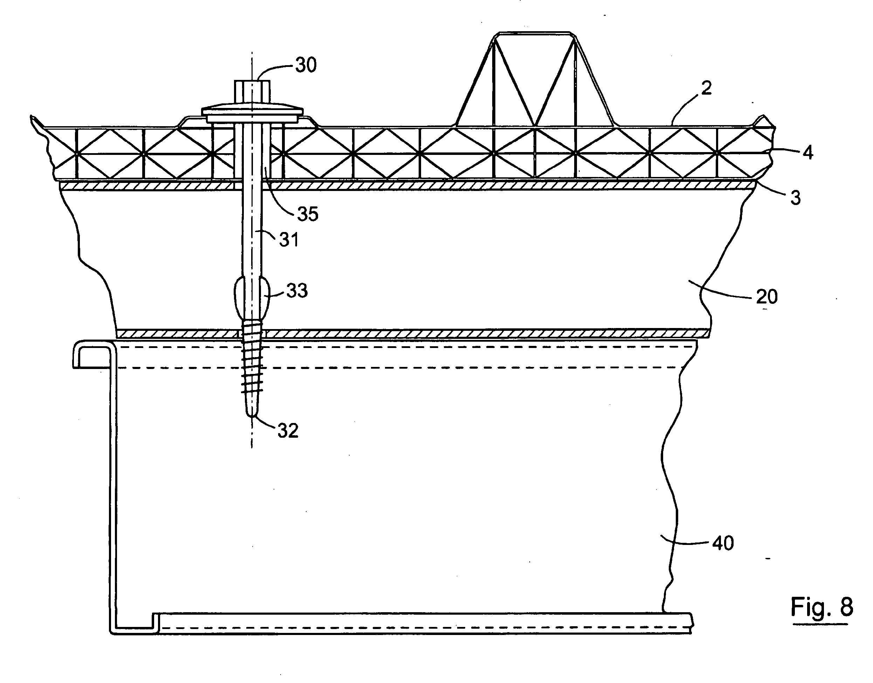

Referring in particular to Figs. 7 and 8 there is illustrated a fixing 30 which is used for fixing the panel 1 to a building frame element such as the roof purlin 40. The fixing has a shaft 31 with a drill point 32 for drilling through the panel, the spacer 20, and into the purlin 40. The fixing also has sharpened side flanges 33 which provide reaming elements for reaming a hole 35 in the panel 1 that is larger in diameter than the diameter of the shaft 31 of the fixing. Such large holes 35 in the panel facilitate any thermal expansion that may occur in the panel without adversely affecting the integrity of the panel at the fixings.

The rooflights of the invention have excellent U-value ratings, do not suffer from the effects of thermal expansion and provide excellent light transmission properties.

In the embodiment described the panel is comprised of a translucent polycarbonate material. It will however, be appreciated that the panel may be comprised of any suitable thermosetting material.

The process of forming the rooflights 1 of the invention as described has advantages including being efficiency and cost effectiveness. It will however be appreciated that the rooflights of the invention may be formed by other suitable means.

The rooflights of the invention have advantages over prior art rooflights including the following. The provision of an overlap portion enables the rooflight panel to be securely connected to adjacent profiled structural roof panels. The profiled form of the rooflight overlap provides a good aesthetic finish and a positive connection between the panels and for an improved weatherproof sealed finish.

The rooflight of the invention comprises connection means to enable secure connection with adjacent similar rooflight panels and/or insulated building panels which may have a thickness greater than the thickness of the rooflight. The rooflight is configured to provide for a side by side connection of the rooflight with the adjacent panel by virtue of the overlap and border features. This arrangement provides improved sealing and insulation between the rooflights and adjacent roof panels.

The spacer and fixing features of the rooflights of the invention provide further advantages. The spacer provides for an improved structural connection between the panels and the roof system which provides a roof having improved insulation properties. The panel of the invention is formed to facilitate any thermal expansion that may occur in the panel.

The invention is not limited to the embodiments hereinbefore described.

## Claims

1. A translucent building panel (1) comprising a single body of translucent material, the single body comprising an outer weather skin (2), an inner liner skin (3) and a multiwall support (4) between the outer weather skin (2) and the inner liner skin (3), the inner liner skin (3), outer weather skin (2) and multiwall support (4) all being of translucent material, the panel (1) further comprising an integral overlap portion (10) at at least one end and/or side thereof, **characterised in that** the outer weather skin (2) is profiled and **in that** the overlap portion (10) has a thickness close to the thickness of the outer weather skin (2), wherein the multiwall support (4) with or without the liner skin (3) is collapsed against the inner surface of the outer weather skin (2) at the overlap portion (10), the panel comprising a main panel portion, the overlap portion (10) and a border (25) between the overlap portion (10) and the main panel portion **characterized in that**
the border (25) extends substantially at right angles to the outer weather skin (2) and inner liner skin (3).

2. A translucent panel as claimed in claim 1 wherein the multiwall support (4) with or without the inner skin (3) is forced against the inner surface of the outer weather skin (2) at the overlap portion (10).

3. A translucent panel as claimed in claim 2 wherein the multiwall support (4) with or without the inner liner skin (3) is pressed against the inner surface of the outer weather skin (2) at the overlap portion (10).

4. A translucent panel as claimed in claim 3 wherein the multiwall support (10) with or without the liner skin (3) is heat pressed against the inner surface of the outer weather skin (2) at the overlap portion (10).

5. A translucent panel as claimed in any of claims 1 to 4 wherein the liner skin (3) and the multiwall support (4) are collapsed or forced against the inner surface of the outer weather skin (2) at the overlap portion (10).

6. A translucent panel as claimed in any of claims 1 to 5 wherein the border (25) extends between the outer weather skin (12) of the overlap portion (10) and the inner liner skin (3) of the main body.

7. A translucent panel as claimed in any of claims 1 to 6 wherein the border (25) comprises a thickness substantially equal to the combined thickness of the multiwall support (4) and inner liner skin (3).

8. A translucent panel as claimed in any of claims 1 to 7 wherein the panel (1) comprises a spacer (20) for extending between the outer surface of the inner liner (3) and a building frame element such as a purlin (40).

9. A translucent panel as claimed in claim 8 wherein the spacer (20) is attached to the panel (1).

10. A translucent panel as claimed in claim 9 wherein the spacer (20) is bonded to the panel (1).

11. A translucent panel as claimed in claims 8 to 10 wherein the spacer (20) is attached to the panel (1) adjacent to the overlap portion (10).

12. A translucent panel as claimed in any of claims 8 to 11 comprising a fixing (30) for extending through the panel (1) and the spacer (20) to fix the panel (1) to a building frame element such as a purlin (40).

13. A translucent panel as claimed in claim 12 wherein the fixing (30) has a drill point (32) for drilling through the panel (1), the spacer (20), and into the building frame element (40).

14. A translucent panel as claimed in claim 12 or 13 wherein the fixing (30) comprises reaming means (33) for reaming a hole (35) in the panel (1).

15. A translucent panel as claimed in claim 14 wherein the hole (35) in the panel is larger in diameter than the diameter of a main shaft (31) of the fixing (30).

16. A translucent panel as claimed in claims 14 or 15 wherein the reaming means (33) comprises sharpened flanges (33) in the fixing shaft (31).

17. A translucent panel as claimed in any preceding claim wherein the multiwall layer (4) comprises a profiled form except at the overlap portion (10).

18. A translucent panel as claimed in any preceding claim wherein the translucent material comprises a translucent thermosetting material.

19. A translucent panel as claimed in any preceding claim wherein the translucent material comprises a polycarbonate material.

20. A roof or wall structure incorporating a panel as claimed in any preceding claim.

## Patentansprüche

1. Durchsichtige Bauplatte (1), umfassend einen einzigen Körper aus durchsichtigem Material, wobei der einzige Körper eine äußere Wetterhaut (2), eine innere Deckhaut (3) und ein mehrwandiges Tragwerk (4) zwischen der äußeren Wetterhaut (2) und der inneren Deckhaut (3) umfasst, wobei die innere Deckhaut (3), die äußere Wetterhaut (2) und das mehrwandige Tragwerk (4) alle aus durchsichtigem Material bestehen, wobei die Platte (1) weiter einen integrierten Überlappungsabschnitt (10) an mindestens einem Ende und/oder einer Seite derselben umfasst, **dadurch gekennzeichnet, dass** die äußere Wetterhaut (2) profiliert ist und dass der Überlappungsabschnitt (10) eine nah bei der Dicke der äußeren Wetterhaut (2) liegende Dicke hat, wobei das mehrwandige Tragwerk (4) mit oder ohne der Deckhaut (3) am Überlappungsabschnitt (10) gegen die Innenseite der äußeren Wetterhaut (2) zusammengeklappt ist, wobei die Platte einen Hauptplattenabschnitt, den Überlappungsabschnitt (10) und einen Rand (25) zwischen dem Überlappungsabschnitt (10) und dem Hauptplattenabschnitt umfasst, **dadurch gekennzeichnet, dass** sich der Rand (25) im Wesentlichen im rechten Winkel zur äußeren Wetterhaut (2) und zur inneren Deckhaut (3) erstreckt.

2. Durchsichtige Platte nach Anspruch 1, wobei das mehrwandige Tragwerk (4) mit oder ohne der inneren Haut (3) am Überlappungsabschnitt (10) gegen die Innenseite der äußeren Wetterhaut (2) gezwängt ist.

3. Durchsichtige Platte nach Anspruch 2, wobei das mehrwandige Tragwerk (4) mit oder ohne der inneren Deckhaut (3) am Überlappungsabschnitt (10) gegen die Innenseite der äußeren Wetterhaut (2) gepresst ist.

4. Durchsichtige Platte nach Anspruch 3, wobei das mehrwandige Tragwerk (10) mit oder ohne der Deckhaut (3) am Überlappungsabschnitt (10) gegen die Innenseite der äußeren Wetterhaut (2) warmgepresst ist.

5. Durchsichtige Platte nach einem der Ansprüche 1 bis 4, wobei die Deckhaut (3) und das mehrwandige Tragwerk (4) am Überlappungsabschnitt (10) gegen die Innenseite der äußeren Wetterhaut (2) zusammengeklappt oder gezwängt sind.

6. Durchsichtige Platte nach einem der Ansprüche 1 bis 5, wobei sich der Rand (25) zwischen der äußeren Wetterhaut (12) des Überlappungsabschnitts (10) und der inneren Deckhaut (3) des Hauptkörpers erstreckt.

7. Durchsichtige Platte nach einem der Ansprüche 1 bis 6, wobei der Rand (25) eine Dicke umfasst, die im Wesentlichen gleich der kombinierten Dicke des mehrwandigen Tragwerks (4) und der inneren Deckhaut (3) ist.

8. Durchsichtige Platte nach einem der Ansprüche 1 bis 7, wobei die Platte (1) einen Abstandhalter (20) umfasst, um sich zwischen der Außenseite der inneren Deckschicht (3) und einem Gebäuderahmenelement, wie beispielsweise eine Dachpfette (40) zu erstrecken.

9. Durchsichtige Platte nach Anspruch 8, wobei der Abstandhalter (20) an der Platte (1) angebracht ist.

10. Durchsichtige Platte nach Anspruch 9, wobei der Abstandhalter (20) an die Platte (1) geklebt ist.

11. Durchsichtige Platte nach Ansprüchen 8 bis 10, wobei der Abstandhalter (20) angrenzend an den Überlappungsabschnitt (10) an der Platte (1) angebracht ist.

12. Durchsichtige Platte nach einem der Ansprüche 8 bis 11, umfassend ein Befestigungselement (30), um sich durch die Platte (1) und den Abstandhalter (20) zu erstrecken, um die Platte (1) an einem Gebäuderahmenelement, wie beispielsweise einer Dachpfette (40) zu befestigen.

13. Durchsichtige Platte nach Anspruch 12, wobei das Befestigungselement (30) eine Bohrspitze (32) zum Bohren durch die Platte (1), den Abstandhalter (20) und in das Gebäuderahmenelement (40) hat.

14. Durchsichtige Platte nach Anspruch 12 oder 13, wobei das Befestigungselement (30) Reibmittel (33) zum Reiben eines Lochs (35) in die Platte (1) umfasst.

15. Durchsichtige Platte nach Anspruch 14, wobei das Loch (35) in der Platte einen Durchmesser hat, der größer ist als der Durchmesser eines Hauptschafts (31) des Befestigungselements (30).

16. Durchsichtige Platte nach Anspruch 14 oder 15, wobei das Reibmittel (33) geschärfte Flansche (33) im Befestigungselementschaft (31) umfasst.

17. Durchsichtige Platte nach einem der vorangehenden Ansprüche, wobei die mehrwandige Schicht (4) außer am Überlappungsabschnitt (10) eine Profilform umfasst.

18. Durchsichtige Platte nach einem der vorangehenden Ansprüche, wobei das durchsichtige Material ein durchsichtiges thermoplastisches Material umfasst.

19. Durchsichtige Platte nach einem der vorangehenden Ansprüche, wobei das durchsichtige Material ein Polycarbonatmaterial umfasst.

20. Dach- oder Wandkonstruktion mit einer Platte nach einem der vorangehenden Ansprüche.

## Revendications

1. Panneau de construction translucide (1) comprenant un corps unique en matériau translucide, le corps unique comprenant une peau extérieure de protection contre les intempéries (2), une peau intérieure de doublure (3) et un support multiparois (4) entre la peau extérieure de protection contre les intempéries (2) et la peau intérieure de doublure (3), la peau intérieure de doublure (3), la peau extérieure de protection contre les intempéries (2) et le support multiparois (4) étant tous en matériau translucide, le panneau (1) comprenant en outre une partie recouvrante intégrée (10) à au moins un(e) côté et/ou extrémité de celui-ci, **caractérisé en ce que** la peau extérieure de protection contre les intempéries (2) est profilée et **en ce que** la partie recouvrante (10) a une épaisseur proche de l'épaisseur de la peau extérieure de protection contre les intempéries (2), où le support multiparois (4) avec ou sans la peau de doublure (3) est affaissé contre la surface intérieure de la peau extérieure de protection contre les intempéries (2) à la partie recouvrante (10), le panneau comprenant une partie principale de panneau, la partie recouvrante (10) et une bordure (25) entre la partie recouvrante (10) et la partie principale de panneau, **caractérisé en ce que** la bordure (25) s'étend sensiblement à angle droit de la peau extérieure de protection contre les intempéries (2) et de la peau intérieure de doublure (3).

2. Panneau translucide conforme à la revendication 1, où le support multiparois (4) avec ou sans la peau intérieure (3) est forcé contre la surface intérieure de la peau extérieure de protection contre les intempéries (2) à la partie recouvrante (10).

3. Panneau translucide conforme à la revendication 2, où le support multiparois (4) avec ou sans la peau intérieure de doublure (3) est pressé contre la surface intérieure de la peau extérieure de protection contre les intempéries (2) à la partie recouvrante (10).

4. Panneau translucide conforme à la revendication 3, où le support multiparois (10) avec ou sans la peau de doublure (3) est thermopressé contre la surface intérieure de la peau extérieure de protection contre les intempéries (2) à la partie recouvrante (10).

5. Panneau translucide conforme à une quelconque des revendications 1 à 4, où la peau de doublure (3) et le support multiparois (4) sont affaissés ou forcés contre la surface intérieure de la peau extérieure de protection contre les intempéries (2) et la partie recouvrante (10).

6. Panneau translucide conforme à une quelconque des revendications 1 à 5, où la bordure (25) s'étend entre la peau extérieure de protection contre les intempéries (12) de la partie recouvrante (10) et la peau intérieure de doublure (3) du corps principal.

7. Panneau translucide conforme à une quelconque des revendications 1 à 6, où la bordure (25) comprend une épaisseur sensiblement égale à l'épaisseur combinée du support multiparois (4) et de la peau intérieure de doublure (3).

8. Panneau translucide conforme à une quelconque des revendications 1 à 7, où le panneau (1) comprend une entretoise (20) prévue pour s'étendre entre la surface extérieure de la doublure intérieure (3) et un élément de bâti de construction tel qu'une panne (40).

9. Panneau translucide conforme à la revendication 8, où l'entretoise (20) est attachée au panneau (1).

10. Panneau translucide conforme à la revendication 9, où l'entretoise (20) est collée au panneau (1).

11. Panneau translucide conforme aux revendications 8 à 10, où l'entretoise (20) est attachée au panneau (1) en position adjacente à la partie recouvrante (10).

12. Panneau translucide conforme à une quelconque des revendications 8 à 11, comprenant une fixation (30) prévue pour s'étendre à travers le panneau (1) et l'entretoise (20) afin de fixer le panneau (1) à un élément de bâti de construction tel qu'une panne (40).

13. Panneau translucide conforme à la revendication 12, où la fixation (30) est munie d'un foret (32) pour percer un trou à travers le panneau (1), l'entretoise (20) et dans l'élément de bâti de construction (40).

14. Panneau translucide conforme à la revendication 12 ou 13, où la fixation (30) comprend un moyen d'alésage (33) pour aléser un trou (35) dans le panneau (1),

15. Panneau translucide conforme à la revendication 14, où le trou (35) dans le panneau a un diamètre plus grand que le diamètre d'un arbre principal (31) de la fixation (30).

16. Panneau translucide conforme aux revendications 14 ou 15, où le moyen d'alésage (33) comprend des ailettes affûtées (33) dans l'arbre de fixation (31).

17. Panneau translucide conforme à une quelconque des revendications précédentes, où la couche multiparois (4) comprend une forme profilée sauf à la partie recouvrante (10).

18. Panneau translucide conforme à une quelconque des revendications précédentes, où le matériau translucide comprend un matériau thermodurcissable translucide.

19. Panneau translucide conforme à une quelconque des revendications précédentes, où le matériau translucide comprend un matériau en polycarbonate.

20. Structure de toit ou de mur incorporant un panneau conforme à une quelconque des revendications précédentes.
